## Europäisches Patentamt
## European Patent Office
## Office européen des brevets

(19)

(11) Publication number: **0 128 638**
A2

(12)

# EUROPEAN PATENT APPLICATION

(21) Application number: **84302303.7**

(22) Date of filing: **04.04.84**

(51) Int. Cl.³: **B 29 D 3/02**, B 29 C 3/04

(30) Priority: **19.04.83 GB 8310550**

(43) Date of publication of application: **19.12.84**
Bulletin 84/51

(84) Designated Contracting States: **DE FR GB IT SE**

(71) Applicant: **Fibreglass Limited, Prescot Road, St. Helens Merseyside WA10 3TT (GB)**

(72) Inventor: **Eastwood, Michael, 29 Sutton Park Drive, St. Helens Merseyside, WA9 3TX (GB)**
Inventor: **Nolan, Michael Gabriel, 88 Sinclair Avenue, Prescot Merseyside, L35 7LW (GB)**

(74) Representative: **Wilson, Joseph Martin et al, WITHERS & ROGERS 4 Dyer's Buildings Holborn, London EC1N 2JT (GB)**

(54) **A method of forming a laminated product.**

(57)    The invention relates to a method of and apparatus for forming a laminated product, for example a laminated trim panel in a motor vehicle. The laminated product comprises a number of plies (2, 4, 6) and is formed by compressing the plies (2, 4, 6) together between two moulds (14, 16) of a press. The plies (2, 4, 6) are held at their edges during their passage to and from the press by means of spikes (32) extending from chains or belts (30). In a preferred embodiment the upper mould (14) is held stationary during the moulding process, the lower mould (16) being moved upwardly to effect compression.

EP 0 128 638 A2

0128638

-1-

## A Method of Forming a Laminated Product

The invention relates to a method of and apparatus for forming a laminated product, such as a laminated glass fibre product for use as a trim panel in a motor vehicle or the like.

It is known from U.S. Patent Specification No. 4,131,664 to manufacture trim panels for use in a motor vehicle by first forming a laminated mat having at least one of its layers made from a fibrous material incorporating a suitable binding agent. The mat which is initially extremely flexible can be fed between upper and lower moulds secured to upper and lower platens of a moulding press. The lower platen and lower mould are kept stationary whilst the upper platen and its mould are lowered until the flexible mat is sandwiched under pressure between the contoured surfaces of the moulds, the flexible mat conforming in shape to the contoured surfaces. At least one of the moulds is provided with heating elements so that the binding agent in the fibrous material can be subjected to an elevated temperature and undergo curing causing the fibrous material to stiffen into the desired contour. A moulded product results which is in the form of a contoured laminated panel which although stiffened has a degree of flexibility as a whole.

Such a method of manufacture can give rise to difficulty especially if the facing material of the mat which comes into contact with the face of the lower mould adheres to the lower mould during the heated moulding

-2-

operation thereby causing not only delay in the process but also possibly damage to the facing material when it is prised away from the face of the lower mould.

According to the present invention there is provided a method of forming a laminated product, which comprises the steps of forming a flexible composite mat from a curable layer of material and at least one facing ply, the curable layer of material having a binding agent distributed therethrough, the curable layer of material and facing ply being adhered to one another and the product being partially cut to shape during compression in a heated press where mould faces have a preselected contour, the heating being sufficient to set the binding agent to retain the layer of material in a preselected contour configuration wherein the improvement lies in moving the flexible mat between upper and lower moulds of the press by means of a conveyor having two continuous conveying members each following a path on a respective side of the press, the conveying members being provided with means to hold the mat during its passage to and from the press, the conveying members being held in tension but the tension being adjusted so that limited movement is feasible during the compression of the mat.

Preferably the method comprises the step of raising the lower mould whilst the upper mould remains stationary. Conveniently the conveying members are in the form of continuous chains or belts and the means of holding the mat comprises spikes which extend from the chains or belts at spaced intervals along their length. Alternatively

each of the conveying members may comprise a pair of moving surfaces disposed so that each edge portion of the mat is nipped between and transported by the pair of moving surfaces.

Preferably the mat is fed by the conveying members along a path which is spaced below the upper mould by a predetermined distance, the distance being such that when the lower mould is raised any sag in the mat is reduced to flatten substantially the mat and allow the mat to be moulded whilst lying in a substantially horizontal plane. In this way unwanted distortion of the mat facing the mould surface can be reduced.

In an alternative embodiment the compression of the mat is effected by lowering the upper mould whilst the lower mould remains stationary.  In a further embodiment the compression of the mat is effected by moving both the upper and lower moulds  towards one another.

According to another feature of the present invention there is provided an apparatus for forming a laminated product from a flexible composite mat, the apparatus comprising a heated moulding press having upper and lower moulds whose faces have a preselected contour, and conveying means for holding the mat during its passage to and from the press, wherein the improvement lies in that the conveying means comprises two continuous conveying members each following a path on a respective side of the press, the conveying members being held in tension but the tension being adjusted so that limited movement is feasible during the compression of the mat.

-4-

Preferably means is also provided for keeping the upper mould stationary whilst the lower mould is raised.

Conveniently a blade is provided on one of the moulds for cutting through portions of the mat during the moulding process. The blade may be provided with recesses at spaced portions along the length of its cutting edge to ensure that short lengths of the material of the mat adjacent the recesses remain uncut so that the moulded mat product can be transported subsequently away from the press by the conveying members. It is also possible however in practice to employ a conventional blade without recesses along its cutting edge in that unless the tolerances of the blades guillotine action are finely adjusted it tends to leave uncut portions of the mat along the intended cutting line.

Our invention also provides a moulded laminated product, such as the trim panel of a motor vehicle, manufactured by our new method and apparatus. The trim panel may for example be the headliner of the motor vehicle.

In one embodiment the composite mat comprises a curable layer of material sandwiched between two facing plies. The curable layer of the material in one embodiment is a non-woven glass fibre mat which is sandwiched between the two plies of facing material. In another embodiment the curable layer of material is felt.

The invention will be described further by way of example with reference to the accompanying drawings in which:-

Figure 1 is a perspective view of a section through a composite laminated mat to be moulded in the heating press of figure 3,

Figure 2 is a schematic side view of one embodiment of press suitable for use in the present invention,

Figure 3 is a perspective view, partly in section, showing the manner in which the laminated mat of figure 1 can be held in position between the moulds for use with the press of figure 2,

Figure 3a is a view along arrow A in figure 3 illustrating a detail of the left hand section through the moulding apparatus and

Figure 4 is a side elevational view of one embodiment of an apparatus according to the present invention.

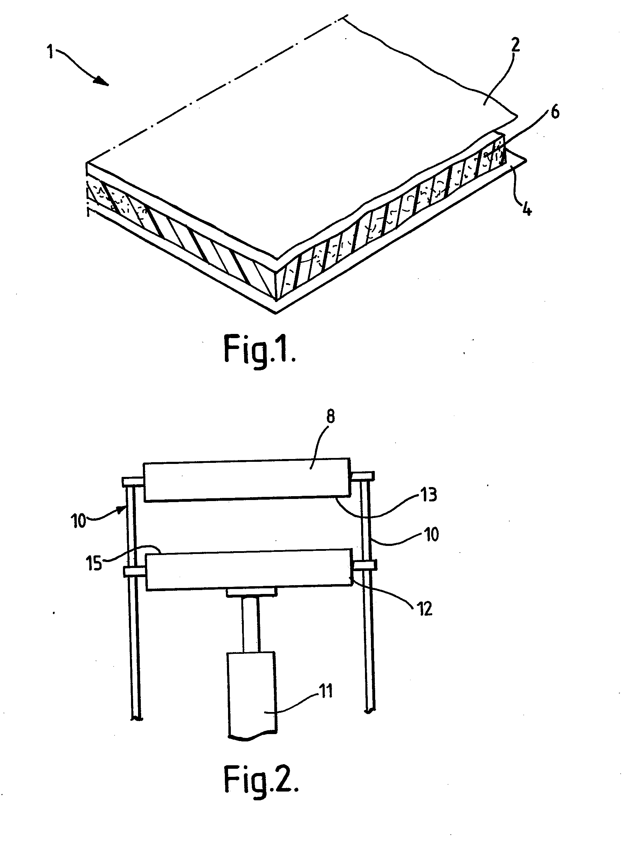

Referring to figure 1 the material to be moulded is illustrated as a mat 1 laminated with three layers. Layers 2,4 are in the form of facing plies 2,4 which together sandwich between them a centre ply consisting of a non-woven curable glass fibre mat 6. The plies 2,4 are treated with adhesive to assist the boding of the cloth to the mat 6.

Figure 2 illustrates the basic features of a press.

-6-

that can be used to mould the mat of figure 1. The press has a higher platen 8 carried in a fixed position on top of a pair of guide rails 10. Also provided is a lower platen 12, the lower platen 12 being guidably supported on a pair of guide rials 10 and reciprocable therealong by means of a piston and cylinder assembly 11.

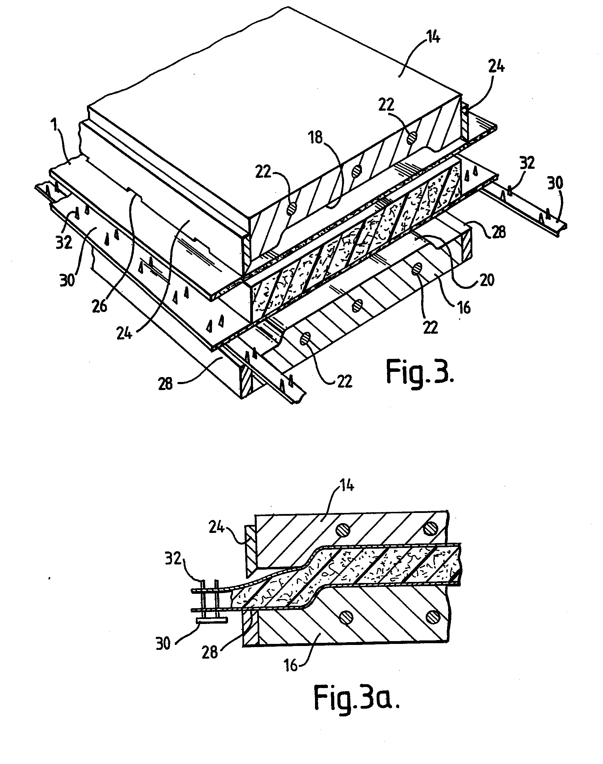

To the opposed surfaces 13,15 of the higher and lower platens 8,12 of figure 2 are secured higher and lower moulds 14,16 (Figure 3). The opposed surfaces 18,20 of the moulds 14,16 are contoured so as to have matching features.

The higher and lower moulds 14,16 are provided with a series of electrical heating elements 22 to effect heating of the higher and lower moulds 14,16 to a desired elevated temperature. Alternatively the heating of the moulds 14,16 can be supplied by hot air or oil which flow through conduits passing through the moulds 14,16. The moulding process is also capable of operation using only one heated mould.

Around the entire periphery of the higher mould 14 there are mounted sealing and cutting bars, only two bars 24 of which are shown in figure 3. The bars 24 have a series of spaced recesses 26 along their length and upon closing of the press the bars coact with peripheral shoulders 28 on the lower mould 16 to both seal off the internal area of the mat 1 and trim the mat 1 except in those regions immediately below the recesses 26.

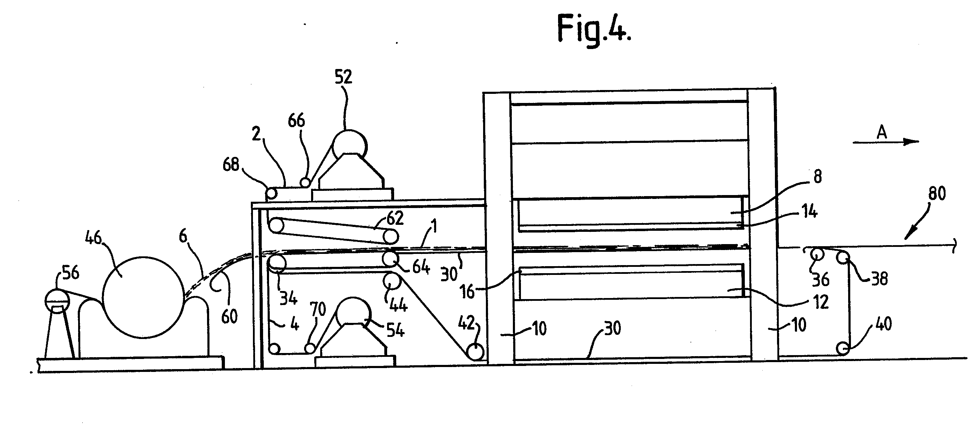

Disposed on each side of the press are two continuous chain conveyors 30 whose disposition relative to the shoulder 28 and blade 24 is better illustrated in figure 3a. Referring to figure 4 each chain conveyor passes around a number of sprockets 34, 36, 38, 40, 42 and 44 at least one of which is driven. The chain conveyors 30 extend between sprockets 34 and 36 in a direction parallel to the conveying path, indicated by arrow A, for the mat 1. The positions of one or more of the sprockets 34, 36, 38, 40, 42 and 44 is adjustable so as to maintain and adjust the tension in the conveyor chains 30. The chain conveyors 30 are provided with spikes 32 at spaced intervals along their length, the spikes 32 serving to hold the mat 1 in its passage to and from the press. The mat 1 tends to sag down under its own weight but is kept supported in a position just below the higher mould 14 by virtue of the tension in the chain conveyors 30.

The mat 1 is formed by bringing together a layer of glass fibre 6 dispensed from a fibre creel 46 with upper and lower facing plies 2,4 dispensed from drums 52,54 respectively. Paper, cloth or other suitable film from a roll 56 is also fed with the layer 6 of glass fibre up a guide arm 60 into a gap between two caterpillar guides 62,64. The upper ply 2 is fed from the drum 52 around two guide pulleys 66,68 and along the underside of the caterpillar guide 62 which guides the upper ply 2 onto the top surface of the fibrous layer 6. The lower ply 4 is fed from the drum 54 around two guide pulleys 70,72 and along the top surface of the caterpillar guide 64 where it engages the lower surface of the glass fibre layer 6. In this way a composite mat 1 is formed whose side edges

-8-

are immediately engaged by the spikes 32 extending from the chain conveyors 30. The continuous mat is conveyed between the chain conveyors 30 until a desired section is disposed between the moulds 14,16 at which point the motor driving the conveyor. chains 30 is stopped hence halting the feeding of the mat 1. At this instant the mat 1 is suspended between the conveyor chains 30 just below the face 16 of the higher mould 14, and mat 1 sagging slightly under its own weight but because of the tension in the chain conveyors 30 not sagging to such an extent as to contact the face 20 of the lower mould 16. The piston and cylinder assembly 11 is then actuated so as to raise the lower mould 16. The tension in the chain conveyors 30 is adjusted so that although it is sufficient to support the weight of the mat 1 it is not so high as to cause the spikes 32 to disengage from the side edges of the mat 1 when the lower mould 16 is raised to compress the mat 1 between the faces 18 and 20. Thus the tension in the chain conveyors 30 is adjusted such that the conveyors 30 have a limited movement in an upward and downward direction without the spikes 32 disengaging from the mat 1.

When the lower mould 16 is raised the side edges of the mat 1 are trimmed and sealed by the cutting and sealing edges on the bars 24. The portions of the mat section beneath the recesses 26 are unaffected. In addition the cut mat section 1 is subjected to an elevated temperature by virtue of the heated upper and lower moulds 14,16.

The elevated temperature is chosen so as to cure the binding agent in the fibrous layer 6 and cause the facing plies 2 and 4 to cohere with the layer 6.

After the moulding process is completed the piston and cylinder assembly 11 is de-pressurised causing the lower mould 16 to be lowered into its rest position shown in figure 4 . Any tendency for the upper facing ply 2 to stick to the face 18 of the higher mould 14 is overcome by a combination of the weight of the moulded mat section and the tension forces acting down on it from the chain conveyors 30. Thus as soon as the lower mould 16 is lowered the moulded mat section springs away from the face 18 of the higher mould 14.

The moulded mat section at this stage is still supported by the spikes 32 which project into the mat section. The drive to the chain conveyors 30 is re-engaged and the moulded mat section transported to a stacking area 70. As the moulded mat section is transported to the stacking area 70 so the chain conveyors 30 are pulling the next mat section to be moulded into place between the moulds 14,16.

Although in the above method we have described the feeding of the mat 1 to the press with the mat 1 in the form of a continuous web it is also possible to feed the mat 1 in discrete mat sections which have been formed upstream of the press. In our embodiment we have described the moulding of a laminated mat comprising a fibrous layer sandwiched between two facing layers but it will be appreciated that the laminated mats may alternatively have two layers or more than three layers.

-10-

Furthermore it will also be appreciated that instead of chain conveyors other continuous conveying means can be employed, such as belts fitted with spikes along their length.

We have found that our method is particularly suitable in the moulding of trim panels, such as headliners, for the interior of motor vehicles for which application one requires both a thin and well formed panel. The method is also particularly suitable for the manufacture of car 'bonnet pads'.

Whereas in the above described embodiment we have described a method in which the lower mould is raised whilst the upper mould is held stationary it is also possible to adapt the press such that the lower mould is kept stationary and the higher mould is lowered. In such an embodiment the laminated mat may stick to the face of the lower mould during the compression stage and if so the tension in the conveyors needs to be sufficient to spring the moulded mat away from the lower mould. In a further embodiment the press can be adapted so that the compression of the mat is effected by moving both the upper and lower moulds towards one another. The preferred embodiment is however that of keeping the upper mould stationary and raising the lower mould as one thereby obtains the maximum benefit from gravity and the tension forces in the conveyors in springing the moulded mat section away from the higher mould.

- 1 -

CLAIMS

1.  A method of forming a laminated product e.g. a trim panel for a motor vehicle, wherein the method comprises the steps of forming a flexible composite mat from a curable layer of material and at least one facing ply, the curable layer of material having a binding agent distributed therethrough, the curable layer of material  and facing ply being adhered to one another and the product being partially cut into shape during compression in a heated press whose mould faces have a preselected contour, the heating during compression being sufficient to set the binding agent to retain the layer of material in a preselected contour configuration, characterised in that the improvement lies in moving the flexible mat between upper and lower moulds of the press by means of a conveyor having two continuous conveying members each following a path on a respective side of the press, the conveying members being provided with means to hold the mat during its passage to and from the press, the conveying members being held in tension but the tension being adjusted so that limited movement is feasible during the compression of the mat.

2. A method according to claim 1 in which compression of the mat is effected either by raising the lower mould whilst the upper mould remains stationary or by lowering the upper mould whilst the lower mould remains stationary or by moving both the upper and lower moulds towards one another.

3. A method according to claim 1 or 2 in which the conveying members are in the form of continuous chains or belts and the means of holding the plies comprise spikes which extend from the chains or belts at spaced intervals along their length.

4. A method as claimed in claim 2 or claim 3 using a movable lower mould in which the mat of plies is fed by the conveying members along a path which is spaced below the upper mould by a predetermined distance, the distance being such that when the lower mould is raised any sag in the plies is reduced to flatten substantially the plies and allow the plies to be moulded whilst lying in a substantially horizontal plane.

5. An apparatus for forming a laminated product from a flexible composite mat, the apparatus comprising a heated moulding press having upper and lower moulds whose faces have a preselected contour, and conveying means for holding the mat during its passage to and from the press, wherein the improvement lies in that the conveying means comprises two continuous conveying members each following a path on a respective side of the press, the conveying members being held in tension but the tension being adjusted so that limited movement is feasible during the compression of the mat.

6. An apparatus as claimed in claim 5 in which means is provided for keeping the upper mould stationary whilst the lower mould is raised.

7. An apparatus as claimed in claim 5 or 6 in which the conveying members are in the form of continuous chains or belts and the means of holding the plies comprise spikes which extend from the chains or belts at spaced intervals along their length.

8. An apparatus as claimed in claim 7 or 8 in which each of the conveying members is in the form of a pair of moving surfaces, disposed so that each edge portion of the mat is nipped between and transported by the moving surfaces.

0128638

- 4 -

9. An apparatus as claimed in claim 7 or 8 in which a blade is provided on at least one of the moulds for cutting through portions of the plies during the moulding process, the blade having recesses at spaced portions along its length arranged so that short lengths of the material of the plies adjacent the recesses remain uncut during the moulding process.

10. A moulded laminated product, e.g. a headliner for a motor vehicle, formed in accordance with the method as claimed in any of claims 1 to 6.

11. A method of forming a laminated product, which comprises the steps of forming a flexible composite mat from a curable layer of material including a suitable binding agent with at least one facing ply secured thereto and partially shaping the product during a compression moulding operation at a temperature sufficient to set the beinding agent in order to retain the layer of material in a preselected shape characterised in that during the moulding operation the flexible mat is caused to travel between upper and lower moulds by a conveyor having two conveying members each of which follows a predetermined path and which are provided with means to hold the mat during its travel and further characterised in that the conveying members are held in tension which is adjusted so that limited movement is feasible during compression of the mat.

Fig.1.

Fig.2.

2/3

Fig.3.

Fig.3a.

3/3

Fig.4.